# EUROPÄISCHE PATENTSCHRIFT

(11) **EP 1 609 097 B1**
(45) Veröffentlichungstag und Bekanntmachung des Hinweises auf die Patenterteilung: **12.10.2016**
(21) Anmeldenummer: 04709190.5
(22) Anmeldetag: 09.02.2004
(51) Int. Cl.: G06Q 20/00, G06F 21/00

(54) **VERFAHREN UND KOMMUNIKATIONSSYSTEM ZUR FREIGABE EINER DATENVERARBEITUNGSEINHEIT**
METHOD AND COMMUNICATION SYSTEM FOR RELEASING A DATA PROCESSING UNIT
PROCEDE ET SYSTEME DE COMMUNICATION POUR HOMOLOGUER UNE UNITE DE TRAITEMENT DE DONNEES

(30) Priorität: 21.03.2003 DE 10312774
(43) Veröffentlichungstag der Anmeldung: 28.12.2005
(73) Patentinhaber: Deutsche Telekom AG, 53113 Bonn (DE)
(72) Erfinder: SAAR, Eva, 64347 Griesheim (DE); LÖHLEIN, Bernhard, 97837 Erlenbach (DE); HUBER, Klaus, 64283 Darmstadt (DE); GUNKEL, Matthias, 64291 Darmstadt (DE)
(74) Vertreter: Blumbach Zinngrebe
(86) Internationale Anmeldenummer: PCT/DE2004/000224
(87) Internationale Veröffentlichungsnummer: WO 2004/086264

(56) Entgegenhaltungen:
- EP-A- 0 915 600
- EP-A- 1 134 644
- DE-A- 19 824 787
- US-A1- 2001 056 533

## Beschreibung

Die Erfindung betrifft ein Verfahren und ein Kommunikationssystem zur Freigabe einer Datenverarbeitungseinheit zur Verarbeitung von Projektdaten eines ausgewählten Projekts.

Ein Anwendungsgebiet für die vorliegende Erfindung ist die kostenpflichtige Nutzung einer Software für die Verarbeitung eines Projekts.

Aus US 2001/0056533 A1 ist eine Computerplattform bekannt, in welcher durch Sicherheitsmaßnahmen der unerlaubte Zugriff auf urheberrechtlich geschütztes Material verhindert werden soll, wobei diese Sicherheitsmaßnahmen ein sicheres Betriebssystem, eine Verschlüsselung mit öffentlichem Schlüssel, eine Datenauthentisierung durch digitale Signaturen, sowie eine Anwendungsprogramm-/ Objektdateienzulassung umfassen. Die Verwendung von digitalen Signaturen dient bei der in US 2001/0056533 A1 beschriebenen Computerplattform insbesondere zur Authentisierung von Datenpaketen wie dem Betriebssystem oder Anwendungsprogrammen und Objektdateien.

Ein technisches Problem der Erfindung ist darin zu sehen, ein Verfahren sowie ein Kommunikationssystem zur Verfügung zu stellen, welches eine projektabhängige Freigabe oder Nutzung einer Datenverarbeitungseinheit ermöglicht.

Ein Grundgedanke der Erfindung ist darin zu sehen, dass ein Kunde Projektdaten eines bestimmten Projekts mit Hilfe einer Soft- und/oder Hardwarekomponente, nachfolgend auch Datenverarbeitungseinheit genannt, be- oder verarbeiten lassen möchte. Allerdings muss sich der Kunde erst ein Nutzungsrecht zur Nutzung der Datenverarbeitungseinheit zur Verarbeitung des einen bestimmten Projekts besorgen. Demzufolge wird ein bestimmtes Freigabesignal erzeugt, welches die Datenverarbeitungseinheit veranlasst, nur die zu dem Projekt gehörenden Projektdaten zu verarbeiten. Die Datenverarbeitungseinheit verarbeitet keine anderen Daten, solange für diese Daten kein Nutzungsrecht für die Nutzung der Datenverarbeitungseinheit vorliegt.

Das oben genannte technische Problem wird zum einen durch ein Verfahren gemäß Anspruch 1 gelöst.

Danach fordert ein Kunde das Nutzungsrecht für die Nutzung einer Datenverarbeitungseinheit an, um die zu einem vorbestimmten Projekt gehörenden Projektdaten zu verarbeiten. Anschließend wird eine erste Signatur erzeugt, indem die vorbestimmten, zu dem Projekt gehörenden Projektdaten insbesondere von einer Signatureinrichtung signiert werden. Die erste Signatur wird auf Korrektheit hin verifiziert. Die Datenverarbeitungseinheit wird nur dann freigegeben, die zum ausgewählten Projekt gehörenden Projektdaten zu verarbeiten, wenn die erste Signatur als korrekt verifiziert worden ist.

Zweckmäßigerweise ist die dem Kunden zugeordnete Datenverarbeitungseinheit, die Bestandteil eines Computers sein kann, über ein Kommunikationsnetz mit der Signatureinrichtung verbunden. In diesem Fall können die vorbestimmten Projektdaten beispielsweise per E-Mail über das Kommunikationsnetz zu einer Nutzungserlaubnis-Erzeugungseinrichtung übertragen werden, in der die erste Signatur erzeugt wird. Die Nutzungserlaubnis-Erzeugungseinrichtung kann ein Computer des Herstellers oder Anbieters der Datenverarbeitungseinheit sein.

Um sicherstellen zu können, dass die vorbestimmten Projektdaten bei der Übertragung zur Nutzungserlaubnis-Erzeugungseinrichtung und auch vor der Nutzungserlaubnis-Erzeugungseinrichtung selbst geheim bleiben, werden die vorbestimmten Projektdaten unter Anwendung einer Hashfunktion kryptografisch gesichert. Die vorbestimmten, kryptografisch gesicherten Projektdaten werden dann über das Kommunikationsnetz zur Nutzungserlaubnis-Erzeugungseinrichtung übertragen, wobei die erste Signatur dadurch erzeugt wird, dass die vorbestimmten, kryptografisch gesicherten Projektdaten von der Signatureinrichtung signiert werden.

Die Hashfunktion komprimiert die vorbestimmten Projektdaten zu einem Hashwert. Ein Hashwert zeichnet sich dadurch aus, dass aus diesem Hashwert nicht auf die ursprünglichen Projektdaten geschlossen werden kann. Ferner haben Hashwerte die Eigenschaft, dass keine zwei verschiedene Projektdaten gefunden werden können, die den gleichen Hashwert ergeben.

Damit sich der Anbieter der Datenverarbeitungseinheit vergewissern kann, dass die vorbestimmten Projektdaten, die zur Freigabe der Datenverarbeitungseinheit signiert werden müssen, von einem bestimmten Kunden kommen, wird kundenseitig eine zweite Signatur erzeugt, indem die vorbestimmten Projektdaten signiert werden. Die vorbestimmten Projektdaten und die zweite Signatur werden dann zur Nutzungserlaubnis-Erzeugungseinrichtung übertragen. In der Nutzungserlaubnis-Erzeugungseinrichtung wird die zweite Signatur auf Korrektheit hin verifiziert. Die Signatureinrichtung erzeugt eine erste Signatur aus den vorbestimmten Projektdaten nur dann, wenn die zweite Signatur korrekt ist.

In ähnlicher Weise kann kundenseitig eine zweite Signatur erzeugt werden, indem die vorbestimmten, zuvor kryptografisch gesicherten Projektdaten signiert werden. Wiederum werden die vorbestimmten, kryptografisch gesicherten Projektdaten und die zweite Signatur zur Nutzungserlaubnis-Erzeugungseinrichtung übertragen. In der Nutzungserlaubnis-Erzeugungseinrichtung wird die zweite Signatur auf Korrektheit hin verifiziert. Die erste Signatur wird aus den vorbestimmten, kryptografisch gesicherten Projektdaten nur dann erzeugt, wenn die zweite Signatur korrekt ist.

Gemäß einer Weiterbildung der Erfindung kann die Projektabhängige Nutzung der Datenverarbeitungseinheit kostenpflichtig sein. Daher wird in Abhängigkeit von den vorbestimmten Projektdaten eines ausgewählten Projekts ein Rechnungsdatensatz zur Nutzung der Datenverarbeitungseinheit erzeugt. Dieser Rechnungsdatensatz entspricht einer Rechnung, die vom Kunden beglichen werden muß. Die Höhe der Rechnung, die dem Rechnungsdatensatz entspricht, kann davon abhängen, wieviele und welche Projektdaten von dem Kunden oder dem Anbieter der Datenverarbeitungseinheit als vorbestimmte Projektdaten definiert werden.

Um eine kostenpflichtige Nutzung der Datenverarbeitungseinheit zu ermöglichen, kann alternativ der Kunde zunächst mehrere Werteinheiten im voraus kaufen, die bei Anforderung eines Nutzungsrechtes durch den Kunden entsprechend entwertet werden. Bei diesem Lösungsansatz kann dafür gesorgt werden, dass die erste Signatur in der Signatureinrichtung erst dann gebildet wird, wenn die Entwertung einer entsprechenden Anzahl an Werteinheiten der Signatureinrichtung bestätigt worden ist. Mit anderen Worten muss der Kunde zuerst für die Nutzung der Datenverarbeitungseinheit bezahlen, bevor diese freigegeben wird.

Das oben genannte technische Problem wird ebenfalls durch ein Kommunikationssystem nach Anspruch 4 gelöst.

Das Kommunikationssystem umfasst einen, einem Kunden zugeordneten Computer, in dem eine Datenverarbeitungseinheit implementiert ist. Wie bereits weiter oben erläutert, kann es sich bei der Datenverarbeitungseinheit um Software- und/oder Hardwarekomponenten handeln. Ferner weist der Computer eine Speichereinrichtung auf, in der vorbestimmte Projektdaten wenigstens eines zu verarbeitenden Projekts abgelegt sind. Es sei angemerkt, dass die vorbestimmten Projektdaten vom Softwareanbieter oder vom Kunden selbst vorher festgelegt werden können. Neben den vorbestimmten, d.h. festen Projektdaten, gibt es variable Projektdaten, die vom Kunden innerhalb eines ausgewählten Projekts geändert werden können, ohne dass eine erneute Freigabe der Datenverarbeitungseinheit angefordert werden müsste. Das Kommunikationssystem umfasst ferner eine dem Computer zugeordnete Nutzungserlaubnis-Erzeugungseinrichtung, die eine erste Signatureinrichtung zum Erzeugen einer ersten Signatur aus den vorbestimmten Projektdaten eines ausgewählten Projekts aufweist. Der Computer weist weiterhin eine Einrichtung zum Verifizieren der ersten Signatur und zur Freigabe der Datenverarbeitungseinheit auf, die die Datenverarbeitungseinheit zum Verarbeiten der zu dem ausgewählten Projekt gehörenden Projektdaten nur dann freigibt, wenn die erste Signatur korrekt ist. Die Verifizierungseinrichtung kann auf einer asymmetrischen Signaturfunktion beruhen, das auch unter dem Namen Public-Key-Kryptografie bekannt ist. Bei der asymmetrischen Signaturfunktion wird jedem Teilnehmer, im vorliegenden Fall dem Kunden und dem Softwareanbieter, ein privater, geheimer Schlüssel und ein sogenannter öffentlicher Schlüssel zugeordnet. Da die asymmetrische Signaturfunktion allgemein bekannt ist, wird hierauf nicht weiter eingegangen.

Beispielsweise ist der Computer und die Nutzungserlaubnis-Erzeugungseinrichtung über ein Kommunikationsnetz, beispielsweise das Internet, ein Fernsprechnetz oder ähnliche Netze, die zur Übertragung von Daten geeignet sind, miteinander verbindbar. Demzufolge weisen der Computer und die Nutzungserlaubnis-Erzeugungseinrichtung jeweils eine Schnittstelle zum Anschalten an dieses Kommunikationsnetz auf. Um über das ungesicherte Kommunikationsnetz die vorbestimmten Projektdaten eines ausgewählten Projektes gesichert übertragen zu können, verfügt der Computer über eine Einrichtung zum kryptografischen Sichern der vorbestimmten Projektdaten, und zwar beispielsweise unter Anwendung einer Hashfunktion. Auf diese Weise bleiben die Projektdaten auch vor der Nutzungserlaubnis-Erzeugungseinrichtung geheim.

Hashfunktionen sind allgemein bekannt, so dass eine Erläuterung über Hashfunktionen entfallen kann. Grundprinzip einer Hashfunktion ist es, kryptografisch zu sichernde Daten auf einen sogenannten Hashwert zu komprimieren.

Die Nutzungserlaubnis-Erzeugungseinrichtung ist in der Lage, die vom Computer über das Kommunikationsnetz übertragenen vorbestimmten Projektdaten bzw. deren Hashwert zu signieren und die resultierende erste Signatur über das Kommunikationsnetz zum Computer zu übertragen.

Um den Kunden, der die Nutzung oder Freigabe der Datenverarbeitungseinheit anfordert, identifizieren zu können, weist der Computer eine zweite Signatureinrichtung zum Erzeugen einer zweiten Signatur aus den vorbestimmten Projektdaten auf. Der Computer kann die zweite Signatur und die dazu gehörenden vorbestimmten Projektdaten über ein Kommunikationsnetz zur Nutzungserlaubnis-Erzeugungseinrichtung übertragen. Die Nutzungserlaubnis-Erzeugungseinrichtung ist zum Verifizieren der zweiten Signatur ausgebildet, wobei die erste Signatureinrichtung die erste Signatur nur dann erzeugt, wenn die zweite Signatur korrekt ist.

Erfindungsgemäß kann die zweite Signatureinrichtung des Computers auch eine zweite Signatur aus den vorbestimmten, kryptografisch gesicherten Projektdaten erzeugen, wobei der Computer dann die zweite Signatur und die dazu gehörenden vorbestimmten, kryptografisch gesicherten Projektdaten über das Kommunikationsnetz zur Nutzungserlaubnis-Erzeugungseinrichtung überträgt. Wiederum ist die Nutzungserlaubnis-Erzeugungseinrichtung zum Verifizieren der zweiten Signatur ausgebildet, wobei die erste Signatureinrichtung die erste Signatur nur dann erzeugt, wenn die zweite Signatur korrekt ist.

Wenn die Nutzung der Datenverarbeitungseinheit kostenpflichtig ist, kann das Kommunikationssystem eine Einrichtung zum Erzeugen eines Rechnungsdatensatzes in Abhängigkeit der vorbestimmten Projektdaten eines ausgewählten Projektes aufweisen. Die Einrichtung zum Erzeugen eines Rechnungsdatensatzes ist vorzugsweise der ersten Signatureinrichtung zugeordnet. Die erste Signatureinrichtung und die Einrichtung zum Erzeugen eines Rechnungsdatensatzes können in einem dem Softwareanbieter zugeordneten Computer implementiert sein. Wichtig ist, darauf hinzuweisen, dass der Kunde für die Nutzung der Datenverarbeitungseinheit zur Verarbeitung von Projektdaten nur einmal für ein Projekt bezahlen muss, sofern die vorbestimmten Projektdaten nicht verändert werden. Im Rahmen der Verarbeitung eines Projektes können daher alle übrigen, nicht vorbestimmten Projektdaten vom Kunden beliebig häufig verändert werden, ohne dass zusätzliche Kosten anfallen. Erst wenn die vorbestimmten Projektdaten für das zu verarbeitende Projekt geändert werden müssen, fallen Kosten für den Kunden an.

Erfindungsgemäß kann die einem Softwareanbieter zugeordnete Nutzungserlaubnis-Erzeugungseinrichtung eine Chipkarte sein, die die erste Signatureinrichtung enthält. Dem Computer ist dann eine Chipkarten-Leseeinrichtung zur Aufnahme der Chipkarte zugeordnet.

Für den Fall, dass die Nutzung der Datenverarbeitungseinheit kostenpflichtig sein soll, kann die Chipkarte derart implementiert sein, dass nur eine bestimmte Anzahl an Signaturen erzeugt wird. Beispielsweise weist die Chipkarte einen Zähler mit einem vorbestimmten Zählstand auf, der jeweils um Eins reduziert wird, wenn vorbestimmte Projektdaten eines ausgewählten Projekts signiert werden sollen. Der Zählstand des Zählers entspricht einem Geldwert, den der Kunde im voraus, beispielsweise durch Kauf der Chipkarte bezahlen muß.

Beispielsweise kann die erste Signatureinrichtung auch im Computer des Kunden implementiert sein. Um eine kostenpflichtige Nutzung der Datenverarbeitungseinheit zu ermöglichen, ist es auch denkbar, Werteinheiten in einem Speicher des Computers abzulegen, die bei jeder Anforderung einer Nutzung der Datenverarbeitungseinheit entsprechend entwertet werden. Die Werteinheiten muß der Kunde im voraus kaufen. Die Werteinheiten, bei denen es sich um Zufallszahlen handeln kann, können vom Kunden in den Computer eingegeben werden. Alternativ können die Werteinheiten über das Kommunikationsnetz beim Anbieter der Datenverarbeitungseinheit angefordert und von diesem beispielsweise per E-Mail zum Computer des Kunden übertragen werden.

Die Werteinheiten können zusammen mit den zu signierenden vorbestimmten Projektdaten oder den vorbestimmten, kryptografisch gesicherten Projektdaten zur Nutzungserlaubnis-Erzeugungseinrichtung übertragen und dort entwertet werden, bevor die erste Signatur aus den vorbestimmten Projektdaten oder den vorbestimmten, kryptografisch gesicherten Projektdaten erzeugt wird. Die Erfindung wird nachfolgend anhand mehrerer Ausführungsbeispiele in Verbindung mit den beiliegenden Zeichnungen näher erläutert.

Es zeigen:
- Fig. 1: ein schematisches Blockschaltbild eines Kommunikationssystem,
- Fig. 2: ein schematisches Blockschaltbild eines alternativen Kommunikationssystems gemäß der Erfindung, und
- Fig. 3: eine Chipkarte mit integrierter Signatureinrichtung, die an den in Fig. 1 und Fig. 2 dargestellten Computer angeschlossen werden kann.

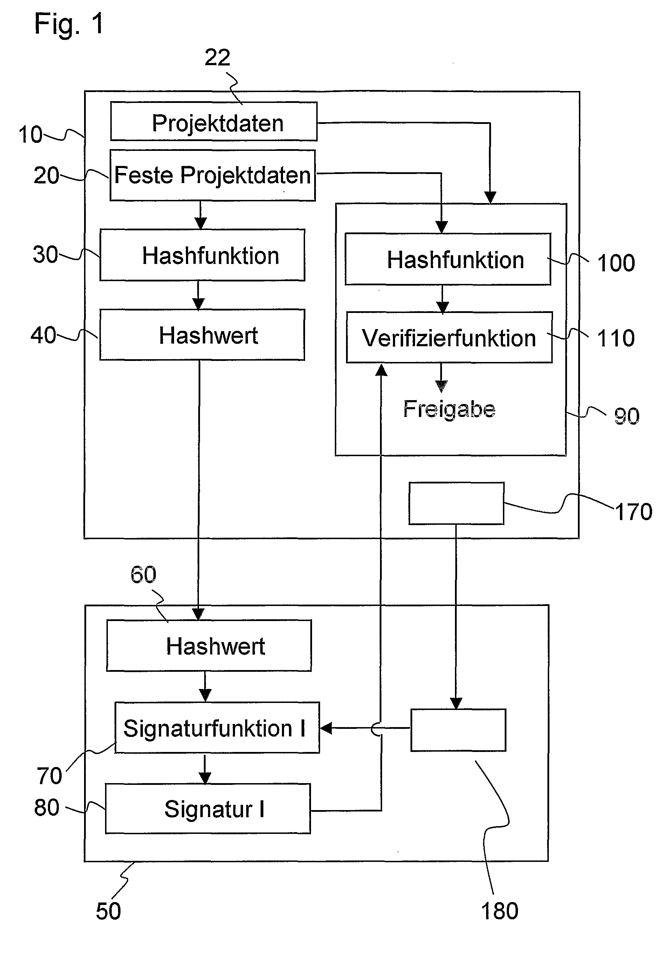

Fig. 1 zeigt ein beispielhaftes Kommunikationssystem, welches einen bei einem Kunden aufgestellten Computer 10 enthält. Der Computer 10 weist einen Speicher 20 auf, in dem die vorbestimmten Projektdaten wenigstens eines Projektes abgelegt werden können. Bei den vorbestimmten Projektdaten handelt es sich um feste Projektdaten eines Projektes. Darüber hinaus gibt es noch variable Projektdaten, die in einem Speicher 22 abgelegt sein können. Ferner kann der Computer 10 eine Einrichtung 30 zum kryptografischen Sichern vorbestimmter Projektdaten aufweisen. Die kryptografische Sicherungseinrichtung 30 führt hierzu eine Hashfunktion mit den vorbestimmten Projektdaten aus. Als Ergebnis liefert die kryptografische Sicherungseinrichtung 30 einen Hashwert der vorbestimmten Projektdaten, der in einem Speicher 40 abgelegt werden kann. Ferner ist in dem Computer eine Datenverarbeitungseinheit 90 implementiert, die als Hardware- und/oder Softwarekomponente ausgebildet sein kann. In der Datenverarbeitungseinheit 90 ist wiederum eine kryptografische Sicherungseinrichtung 100 vorgesehen, der die festen Projektdaten eines ausgewählten Projekts zugeführt werden. Die kryptografische Sicherungseinrichtung 100 ist mit einer Verifizierungseinrichtung 110 verbunden.

Gemäß dem Ausführungsbeispiel nach Fig. 1 ist der Computer 10 über ein Kommunikationsnetz, beispielsweise das Internet mit einer einem Softwareanbieter zugeordneten Nutzungserlaubnis-Erzeugungseinrichtung 50 verbunden, die nachfolgend kurz Rechner genannt wird. Der Rechner 50 kann einen Speicher 60 aufweisen, in dem der vom Computer 10 kommende Hashwert der vorbestimmten Projektdaten abgelegt wird. Der Speicher 60 ist mit einer Signatureinrichtung 70 verbunden, die mittels eines geheimen Schlüssels den Hashwert signiert. Die in der Signatureinrichtung 70 erzeugte Signatur I kann in einem Speicher 80 abgelegt werden. Der Rechner 50 überträgt die im Speicher 80 abgelegte Signatur I über das Kommunikationsnetz zum Computer 10. Im Computer 10 wird die empfangene Signatur I der Verifizierungseinrichtung 110 zugeführt. Die Verifizierungseinrichtung 110 basiert vorteilhafterweise auf einer asymmetrischenSignaturfunktion, beispielsweise dem sogenannten RSA-Verfahren. Die Verifizierungseinrichtung 110 ist dazu ausgebildet, mit Hilfe des in der kryptografischen Sicherungseinrichtung 100 erzeugten Hashwertes und der empfangenen Signatur I festzustellen, ob die Signatur I korrekt ist. Stellt die Verifizierungseinrichtung 110 fest, dass die bei ihr eingereichte Signatur I echt ist, d. h. tatsächlich von der ersten Signatureinrichtung stammt, wird die Datenverarbeitungseinheit 90 zur Verarbeitung der zum ausgewählten Projekt gehörenden Projektdaten freigegeben.

In dem Computer 10 kann ein Speicher 170 zum Ablegen von Werteinheiten vorgesehen sein. Diese Werteinheiten werden vom Kunden vorausbezahlt und auf Anforderung des Kunden beispielsweise in dem Rechner 50 erzeugt, über das Kommunikationsnetz übertragen und in den Speicher 170 geladen. Die Entwertung der Werteinheiten kann in dem Computer 10 erfolgen oder aber dadurch bewirkt werden, dass Werteinheiten aus dem Speicher 170 über das Kommunikationsnetz zu einer Entwerteeinrichtung 180 des Rechners 50 übertragen werden. Die Werteinheiten können verschlüsselt oder unverschlüsselt vom Computer 10 zum Rechner 50 übertragen werden.

Eine vorteilhafte Weiterbildung sieht vor, dass die Signatureinrichtung 70 den vom Computer 10 übertragenen Hashwert erst dann signiert, wenn eine entsprechende Anzahl an Werteinheiten in der Entwertungseinrichtung 180 entwertet worden ist. Die Entwerteeinrichtung 180 liefert hierzu ein entsprechendes Triggersignal an die Signatureinrichtung 70. Auf diese Weise wird sichergestellt, dass die Nutzung der Datenverarbeitungseinheit 90 erst dann freigegeben wird, wenn der Kunde den fälligen Betrag bezahlt hat.

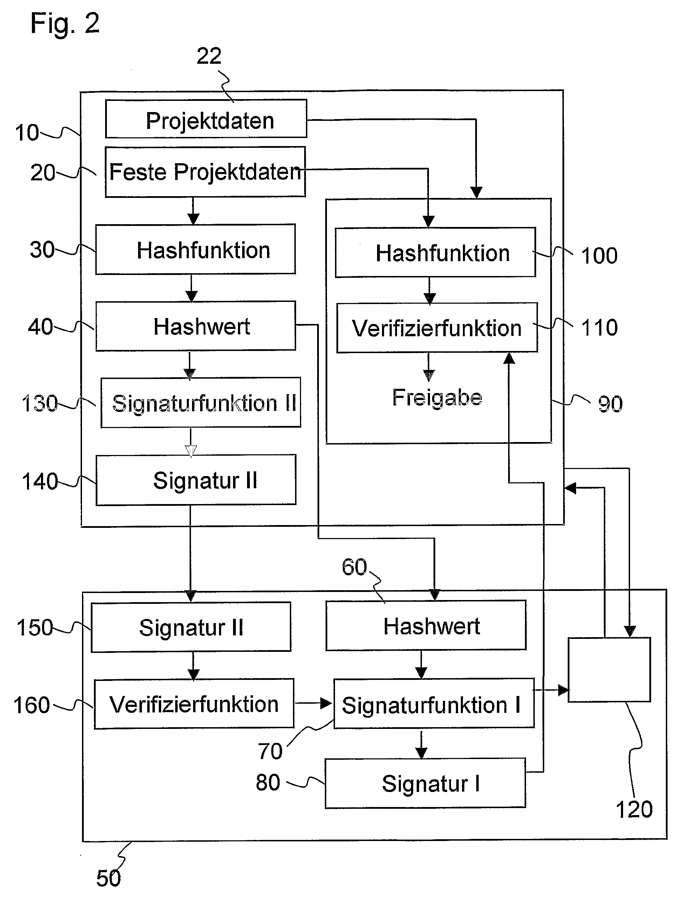

In Fig. 2 ist ein alternatives Kommunikationssystem dargestellt.

Im Unterschied zu dem in Fig. 1 dargestellten Computer 10 weist der in Fig. 2 dargestellte Computer 10 noch eine Signatureinrichtung 130 auf, die den im Speicher 40 abgelegten Hashwert signiert. Diese Signatur II kann in einem Speicher 140 abgelegt werden. Die Signatureinrichtung 130 dient dazu, Softwareanbietern eine Möglichkeit zu geben, zu überprüfen, ob der die Nutzung der Datenverarbeitungseinheit 90 anfordernde Kunde auch tatsächlich der Kunde ist, von dem der Hashwert der vorbestimmten Projektdaten kommt. Zur Prüfung der Signatur II ist in dem Rechner 50 eine Verifizierungseinrichtung 160 implementiert. Vorzugsweise ist der Verifizierungseinrichtung 160 ein Speicher 150 zugeordnet, in dem die von der Signatureinrichtung 130 erzeugte Signatur II abgelegt werden kann. Wie der Rechner 50 nach Fig. 1 weist der in Fig. 2 dargestellte Rechner 50 eine Signatureinrichtung 70, einen Speicher 60 zum Speichern eines vom Computer 10 kommenden Hashwertes sowie einen Speicher 80 zur Speicherung der in der Signatureinrichtung 70 erzeugten Signatur I auf.

Die Verifizierungseinrichtung 160 ist mit der Signatureinrichtung 70 verbunden. Die Signatureinrichtung 70 bildet über den vom Computer 10 kommenden Hashwert eine Signatur I erst dann, wenn die Verifizierungseinrichtung 160 signalisiert, dass die vom Computer 10 kommende Signatur II korrekt ist. Darüber hinaus kann der in Fig. 2 gezeigte Rechner 50 weiterhin eine Einrichtung 120 zum Erstellen eines Rechnungsdatensatzes enthalten. Ein Rechnungsdatensatz wird erzeugt, wenn die Signatureinrichtung 70 eine Signatur I erzeugt hat. Der Rechnungsdatensatz kann vom Rechner 50 über das Kommunikationsnetz zum Computer 10 übertragen und dort beispielsweise als Rechnung auf einem nicht dargestellten Drucker ausgegeben werden.

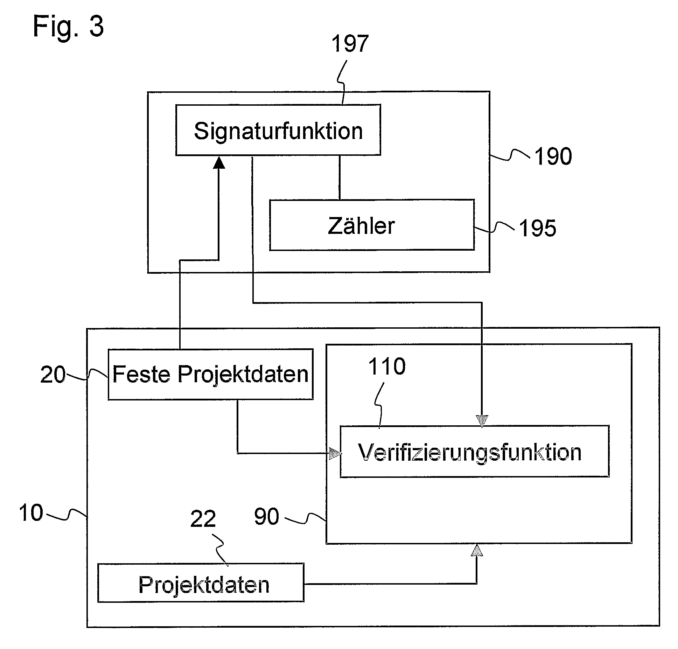

Fig. 3 zeigt eine alternative Ausführungsform der in Fig. 1 und Fig. 2 gezeigten Signatureinrichtung 70. Danach ist eine Signatureinrichtung 197 in einer Chipkarte 190 implementiert. Die Chipkarte 190 kann in eine nicht dargestellte Chipkarte-Leseeinrichtung eingesetzt werden, die extern an einen Computer 10 angeschlossen werden kann. Die Chipkarten-Leseeinrichtung kann aber auch im Computer 10 selbst implementiert sein. Der Computer 10 weist einen Speicher 20 auf, in dem vorbestimmte Projektdaten wenigstens eines Projekts gespeichert werden können. In einem weiteren Speicher 22 sind die übrigen, variablen Projektdaten wenigstens eines Projekts gespeichert. Ferner weist der Computer 10 eine Datenverarbeitungseinheit 110 mit einer Verifizierungseinrichtung auf.

Die in dem Speicher 20 des Computers 10 gespeicherten festen Projektdaten werden zur Signatureinrichtung 197 der Chipkarte 190 übertragen, sobald der Kunde die Nutzung einer Datenverarbeitungseinheit 90 anfordert. Die festen Projektdaten werden signiert und als Signatur zur Verifizierungseinrichtung 110 übertragen. Wie Fig. 3 weiter zeigt, ist der Speicher 20 ebenfalls mit der Verifizierungseinrichtung 110 verbunden. Es sei angemerkt, dass die Verifizierungseinrichtung 110 als Software und/oder Hardwarekomponente ausgebildet sein kann. Stellt die Verifikationseinrichtung 110 fest, dass die von der Signatureinrichtung 197 kommende Signatur korrekt ist, wird die Datenverarbeitungseinheit 90 zur Verarbeitung der zu einem ausgewählten Projekt gehörenden Projektdaten freigegeben.

Soll die Nutzung der Datenverarbeitungseinheit 90 kostenpflichtig sein, so kann in der Chipkarte 190 ein Zähler 195 implementiert sein, dessen Zählstand einem bestimmten Geldwert entspricht. Der Zählstand wird jeweils um Eins reduziert, wenn die Signatureinrichtung 197 vorbestimmte Projektdaten eines ausgewählten Projekts signiert. Der Kunde kann die Chipkarte 190 mit einem vorbestimmten Zählstand kaufen, so dass er für die projektbezogene, kostenpflichtige Nutzung der Datenverarbeitungseinheit 90 im voraus bezahlt hat.

Die Funktionsweise des Kommunikationssystems wird nachfolgend anhand eines Ausführungsbeispiels in Verbindung mit Fig. 2 näher erläutert.

Angenommen sei, dass der Kunde Lichtwellenleiter zwischen München und Darmstadt verlegen möchte. Zu diesem Projekt gehören mehrere Projektdaten, wie z.B. die Streckenlänge L zwischen München und Darmstadt, Fasertypen und die Faserdämpfung der zu verwendenden Lichtwellenleiter. Ferner sei angenommen, dass die Projektdaten "Streckenlänge" vom Kunden als feste Projektdaten vorgegeben werden. Die Projektdaten "Fasertyp" und "Faserdämpfung" sind freie, d.h. variable Projektdaten. Die Streckenlänge L zwischen München und Darmstadt wird als feste Projektdaten in den Speicher 20 abgelegt. Die übrigen Projektdaten können im Speicher 22 abgelegt sein, oder bei Bedarf über die Tastatur des Computers 10 eingegeben werden.

Der Kunde möchte nunmehr das Projekt "Verlegung von Lichtwellenleitern zwischen München und Darmstadt" von der Datenverarbeitungseinheit 90 berechnen lassen. Um die Datenverarbeitungseinheit 90 für das ausgewählte Projekt nutzen zu können, muss der Kunde zunächst ein Nutzungsrecht anfordern oder die Freigabe der Datenverarbeitungseinheit beantragen. Die Anforderung der Nutzungsrechte erfolgt zunächst dadurch, dass für die im Speicher 20 abgelegte Streckenlänge L in der kryptografischen Sicherungseinrichtung 30 ein entsprechender Hashwert erzeugt wird. Um den Sicherheitsstand zu erhöhen, wird der Hashwert in der Signatureinrichtung 130 signiert. Anschließend werden sowohl der Hashwert als auch die Signatur II des Hashwertes per E-Mail über das Kommunikationsnetz zum Rechner 50 übertragen. Die Signatureinrichtung 130 kann auf einem StandardVerfahren, wie z.B. Pretty Good Privacy (PGP) beruhen. Alternativ kann auch bei der Erzeugung des Hashwertes in der kryptografischen Sicherungseinrichtung 40 eine Signaturfunktion durchgeführt werden. Wichtig ist, dass die in der Signatureinrichtung 130 erzeugte Signatur II mit einem geheimen Schlüssel erzeugt wird, der dem Anbieter der Datenverarbeitungseinheit 90 nicht bekannt ist. Der per E-Mail übertragene Hashwert und die Signatur II werden in dem Speicher 60 bzw. 150 des Rechners 50 abgelegt. Anschließend wird die Signatur II der Verifizierungseinrichtung 160 zugeführt, die unter Anwendung bekannter Methoden prüft, ob die in der Signatureinrichtung 130 erzeugte Signatur II korrekt ist. Ist die Signatur II korrekt, wird die Signatureinrichtung 70 veranlasst, den im Speicher 60 abgelegten Hashwert zu signieren. Der signierte Hashwert kann beispielsweise in dem Speicher 80 abgelegt werden. Die Signatureinrichtung 70 verwendet einen geheimen Schlüssel, der unabhängig ist von dem geheimen Schlüssel der Signatureinrichtung 130 des Computers 10. Die im Speicher 80 hinterlegte Signatur I wird beispielsweise per E-Mail über das Kommunikationsnetz dem Computer 10 und von dort der Verifizierungsfunktion 110 zugeführt. Für die Streckenlänge L, die im Speicher 20 abgelegt ist, wird in der kryptografischen Sicherungseinrichtung 100 ein Hashwert erzeugt, der ebenfalls der Verifizierungsfunktion 110 zugeführt wird. Unter Anwendung bekannter asymmetrischer Signaturfunktionen prüft die Verifizierungseinrichtung 110, ob die vom Rechner 50 kommende Signatur I korrekt ist. Ist die Signatur korrekt, wird die Datenverarbeitungseinheit 90 freigeschaltet und die zu dem Projekt "Verlegung von Lichtwellenleitern zwischen München und Darmstadt" gehörenden Projektdaten, die beispielsweise in den Speichern 20 und 22 abgelegt sind, werden zur Verarbeitung in die Datenverarbeitungseinheit 90 eingegeben.

Mit der Erstellung der Signatur I in der Signatureinrichtung 70 wird die Einrichtung 120 veranlasst, einen entsprechenden Rechnungsdatensatz zu erzeugen, der beispielsweise ebenfalls per E-Mail zum Computer 10 übertragen wird. Der Rechnungsdatensatz kann in eine Rechnung umgesetzt und über einen Drucker (nicht dargestellt) ausgegeben werden. Um einen Rechnungsdatensatz in Abhängigkeit von den im Speicher 20 abgelegten vorbestimmten Projektdaten erstellen zu können, werden bestimmte Parameter, wie zum Beispiel Anzahl und Art der für ein ausgewähltes Projekt vorbestimmten Projektdaten, oder die vorbestimmten Projektdaten selbst vom Computer 10 zur Einrichtung 120 übertragen. Die Parameter können verschlüsselt zum Rechner 50 übertragen werden. Der Rechner 50 oder die Einrichtung 120 ist in der Lage, die verschlüsselten Parameter wieder zu entschlüssen.

## Patentansprüche

1. Verfahren zur Freigabe einer Datenverarbeitungseinheit (90) zur Verarbeitung von Projektdaten eines Projekts, nach welchem
ein Kunde die Nutzungserlaubnis für die Nutzung einer Datenverarbeitungseinheit (90) zur Verarbeitung der zu einem vorbestimmten Projekt gehörenden Projektdaten anfordert, wobei vorbestimmte, zu dem Projekt gehörende Projektdaten kryptografisch gesichert werden,
eine zweite Signatur (II) erzeugt wird, indem die vorbestimmten, kryptografisch gesicherten Projektdaten signiert werden,
die vorbestimmten, kryptografisch gesicherten Projektdaten und die zweite Signatur (II) zu einer Nutzungserlaubnis-Erzeugungseinrichtung (50, 70) übertragen werden,
eine erste Signatur (I) erzeugt wird, indem die vorbestimmten, kryptografisch gesicherten Projektdaten von der Nutzungserlaubnis-Erzeugungseinrichtung (50, 70) signiert werden, wobei die zweite Signatur (II) auf Korrektheit hin verifiziert wird und die erste Signatur (I) aus den vorbestimmten, kryptografisch gesicherten Projektdaten nur erzeugt wird, wenn die zweite Signatur korrekt ist,
die erste Signatur (I) auf Korrektheit hin verifiziert wird, und
die Datenverarbeitungseinheit (90) nur dann freigegeben wird, die zum ausgewählten Projekt gehörenden Projektdaten zu verarbeiten, wenn die erste Signatur (I) als korrekt verifiziert worden ist, wobei die Nutzungserlaubnis-Erzeugungseinrichtung eine Chipkarte (190) ist, in der eine erste Signatureinrichtung (197) implementiert ist und die eine vorbestimmte Anzahl an ersten Signaturen erzeugen kann, und wobei dem Computer (10) eine Chipkarten-Leseeinrichtung zugeordnet ist.

2. Verfahren nach Anspruch 1,
**dadurch gekennzeichnet, dass**
für den Kunden in Abhängigkeit von den vorbestimmten Projektdaten ein Rechnungsdatensatz zur Nutzung der Datenverarbeitungseinheit (90) erzeugt wird.

3. Verfahren nach einem der Ansprüche 1 oder 2,
**dadurch gekennzeichnet, dass**
einem Kunden mehrere Werteinheiten zur Freigabe der Datenverarbeitungseinheit (90) für mehrere Projekte zugeordnet werden, die bei Anforderung eines Nutzungsrechts durch den Kunden entsprechend entwertet werden.

4. Kommunikationssystem zur Freigabe einer Datenverarbeitungseinheit zur Verarbeitung von Projektdaten eines ausgewählten Projekts, mit einem einem Kunden zugeordneten Computer (10), in dem eine Datenverarbeitungseinheit (90) implementiert ist und der eine Speichereinrichtung (20) aufweist, in der vorbestimmte Projektdaten wenigstens eines zu verarbeitenden Projekts abgelegt sind, wobei der Computer (10) eine Einrichtung (30) zum kryptografischen Sichern der vorbestimmten Projektdaten, insbesondere unter Anwendung einer Hashfunktion, aufweist,
einer dem Computer (10) zugeordneten Nutzungserlaubnis-Erzeugungseinrichtung (50), die eine erste Signatureinrichtung (70) zum Erzeugen einer ersten Signatur (I) aus den vorbestimmten kryptografisch gesicherten Projektdaten eines ausgewählten Projekts enthält
wobei der Computer (10) eine Einrichtung (110) zum Verifizieren der ersten Signatur (I) und zum Freigeben der Datenverarbeitungseinheit (90) aufweist, die die Datenverarbeitungseinheit (90) zum Verarbeiten der zu dem ausgewählten Projekt gehörenden Projektdaten nur dann freigibt, wenn die erste Signatur (I) korrekt ist, und wobei
dem Computer (10) eine zweite Signatureinrichtung (130) zum Erzeugen einer zweiten Signatur (II) aus den vorbestimmten, kryptografisch gesicherten Projektdaten zugeordnet ist, und wobei
der Computer (10) zum Übertragen der zweiten Signatur (II) und der dazugehörenden vorbestimmten, kryptografisch gesicherten Projektdaten zur Nutzungserlaubnis-Erzeugungseinrichtung (50) ausgebildet ist, und wobei
die Nutzungserlaubnis-Erzeugungseinrichtung (50) eine Einrichtung (160) zum Verifizieren der zweiten Signatur (II) aufweist, wobei die erste Signatureinrichtung (70) die erste Signatur (I) nur erzeugt, wenn die zweite Signatur (II) korrekt ist, und wobei
die Nutzungserlaubnis-Erzeugungseinrichtung eine Chipkarte (190) ist, in der die erste Signatureinrichtung (197) implementiert ist und die eine vorbestimmte Anzahl an ersten Signaturen erzeugen kann, und wobei
dem Computer (10) eine Chipkarten-Leseeinrichtung zugeordnet ist.

5. Kommunikationssystem nach Anspruch 4,
**gekennzeichnet durch**
eine Einrichtung (120) zum Erzeugen eines Rechnungsdatensatzes für den Kunden zur Nutzung der Datenverarbeitungseinheit (90) in Abhängigkeit der vorbestimmten Projektdaten eines ausgewählten Projekts.

6. Kommunikationssystem nach einem der Ansprüche 4 oder 5, **gekennzeichnet durch**
einen dem Computer (10) zugeordneten Speicher (170), in dem für wenigstens einen Kunden wenigstens eine Werteinheit zur kostenpflichtigen Freigabe der Datenverarbeitungseinheit (90) für die Verarbeitung von Projektdaten wenigstens eines ausgewählten Projekts gespeichert sind, und
eine Einrichtung (180) zum Entwerten der Werteinheiten.

## Claims

1. A method for releasing a data processing unit (90) for processing project data of a project, wherein
a customer requests usage authorization for using a data processing unit (90) to process project data associated with a predetermined project; wherein
predetermined project data associated with the project are cryptographically secured;
a second signature (II) is generated by signing the predetermined cryptographically secured project data; the predetermined, cryptographically secured project data and the second signature (II) are transmitted to a usage authorization generating means (50, 70);
a first signature (I) is generated by the usage authorization generating means (50, 70) by signing the predetermined, cryptographically secured project data, wherein the second signature (II) is verified for correctness and the first signature (I) is only generated from the predetermined cryptographically secured project data if the second signature is correct; the first signature (I) is verified for correctness; and the data processing unit (90) is only released to process the project data associated with the project if the first signature (I) has been verified as correct; wherein the usage authorization generating means is a chip card (190) in which a first signature device (197) is implemented and which is capable of generating a predetermined number of first signatures, and wherein the computer (10) has associated therewith a chip card reading device.

2. The method according to claim 1,
**characterized in that**
depending on the predetermined project data an invoice data record for usage of the data processing unit (90) is generated for the customer.

3. The method according to claim 1 or 2,
**characterized in that**
a customer gets assigned a plurality of value units for release of the data processing unit (90) for a plurality of projects, which value units are devalued in response to a request of a usage authorization by the costumer.

4. A communication system for releasing a data processing unit for processing project data of a selected project, comprising:
a computer (10) assigned to a costumer, which has a data processing unit (90) implemented therein, and which has a memory means (20) which stores predetermined project data of at least one project to be processed, wherein
the computer (10) comprises means (30) for cryptographically securing the predetermined project data, in particular by using a hash function;
a usage authorization generating means (50) associated with the computer, which comprises a first signature device (70) for generating a first signature (I) from the predetermined cryptographically secured project data of a selected project;
wherein the computer (10) comprises means (110) for verifying the first signature (I) and for releasing the data processing unit (90), which only releases the data processing unit (90) for processing the project data associated with the selected project if the first signature (I) is correct; and wherein
the computer (10) has associated therewith a second signature device (130) for generating a second signature (II) from the predetermined, cryptographically secured project data; and wherein
the computer (10) is adapted for transmitting the second signature (II) and the associated predetermined cryptographically secured project data to the usage authorization generating means (50); and wherein
the usage authorization generating means (50) comprises means (160) for verifying the second signature (II),
wherein the first signature device (70) only generates the first signature (I) if the second signature (II) is correct; and wherein
the usage authorization generating means is a chip card (190) in which the first signature device (197) is implemented and which is capable of generating a predetermined number of first signatures; and wherein
the computer (10) has associated therewith a chip card reading device.

5. The communication system according to claim 4,
**characterized by**
means (120) for generating an invoice data record for the costumer for usage of the data processing unit (90) depending on the predetermined project data of a selected project.

6. The communication system according to claim 4 or 5,
**characterized by**
a memory (170) associated with the computer (10), which stores at least one value unit for paid release of the data processing unit (90) for processing project data of at least one selected project; and
means (180) for devaluing the value units.

## Revendications

1. Procédé de validation d'une unité de traitement de données (90), destinée au traitement de données d'un projet, où
un client demande le droit d'utilisation d'une unité de traitement de données (90) pour le traitement des données de projet relevant d'un projet prédéterminé, des données de projet prédéfinies relevant du projet étant sécurisées par cryptographie,
une deuxième signature (II) est générée par apposition d'une signature aux données de projet prédéfinies sécurisées par cryptographie,
les données de projet prédéfinies sécurisées par cryptographie et la deuxième signature (II) sont transmises à un dispositif de génération de droit d'utilisation (50, 70),
une première signature (I) est générée par apposition d'une signature par le dispositif de génération de droit d'utilisation (50, 70) aux données de projet prédéfinies sécurisées par cryptographie, l'authenticité de ladite deuxième signature (II) étant vérifiée et la première signature (I) n'étant générée à partir des données de projet prédéfinies sécurisées par cryptographie que si la deuxième signature est authentique,
l'authenticité de la première signature (I) est vérifiée, et
l'unité de traitement de données (90) n'est validée pour traiter les données de projet relevant du projet sélectionné que si la première signature (I) a été constatée authentique, le dispositif de génération de droit d'utilisation étant une carte à puce (190) où est implémenté un premier dispositif de signature (197), et pouvant générer un nombre prédéfini de premières signatures, et un dispositif de lecture de carte à puce étant associé à l'ordinateur (10).

2. Procédé selon la revendication 1,
**caractérisé en ce qu'**un enregistrement de facture pour l'utilisation de l'unité de traitement de données (90) est généré pour le client en fonction des données de projet prédéfinies.

3. Procédé selon l'une des revendications 1 et 2, **caractérisé en ce que** plusieurs unités de valeur sont associées à un client pour la validation de l'unité de traitement de données (90) pour plusieurs projets, lesquelles sont dévalorisées en conséquence en cas de demande d'un droit d'utilisation par le client.

4. Système de communication pour la validation d'une unité de traitement de données destinée au traitement de données d'un projet sélectionné, avec un ordinateur (10) associé à un client, où est implémentée une unité de traitement de données (90) et qui comporte un dispositif de mémorisation (20) où sont stockées des données de projet prédéfinies d'au moins un projet à traiter, l'ordinateur (10) comportant un dispositif (30) pour la sécurisation cryptographique des données de projet prédéfinies, en particulier au moyen d'une fonction de hachage,
un dispositif de génération de droit d'utilisation (50) associé à l'ordinateur (10), comprenant un premier dispositif de signature (70) pour la génération d'une première signature (I) à partir de données prédéfinies d'un projet sélectionné, sécurisées par cryptographie,
l'ordinateur (10) comportant un dispositif (110) pour la vérification de la première signature (I) et pour la validation de l'unité de traitement de données (90), lequel ne valide l'unité de traitement de données (90) pour le traitement des données de projet relevant du projet sélectionné que si la première signature (I) est authentique, et
un deuxième dispositif de signature (130) pour la génération d'une deuxième signature (II) à partir de données de projet prédéfinies sécurisées par cryptographie étant associé à l'ordinateur (10), et
l'ordinateur (10) étant prévu pour la transmission de la deuxième signature (II) et des données de projet prédéfinies sécurisées par cryptographie correspondantes au dispositif de génération de droit d'utilisation (50), et
le dispositif de génération de droit d'utilisation (50) comportant un dispositif (160) pour la vérification de la deuxième signature (II), le premier dispositif de signature (70) ne générant la première signature (I) que si la deuxième signature (II) est authentique, et
le dispositif de génération de droit d'utilisation étant une carte à puce (190), où est implémenté le premier dispositif de signature (197) et pouvant générer un nombre prédéfini de premières signatures, et
un dispositif de lecture de carte à puce étant associé à l'ordinateur (10).

5. Système de communication selon la revendication 4, **caractérisé par** :
un dispositif (120) pour la génération d'un enregistrement de facture pour le client afin d'utiliser l'unité de traitement de données (90) en fonction des données prédéfinies d'un projet sélectionné.

6. Système de communication selon l'une des revendications 4 ou 5,
**caractérisé par** :
une mémoire (170) associée à l'ordinateur (10), où est mémorisée, pour au moins un client, au moins une unité de valeur pour une validation payante de l'unité de traitement de données (90) pour le traitement de données d'au moins un projet sélectionné, et
par un dispositif (180) pour la dévalorisation des unités de valeur.
